(19) Europäisches Patentamt
European Patent Office
Office européen des brevets

(11) Veröffentlichungsnummer : **0 533 722 B1**

(12) # EUROPÄISCHE PATENTSCHRIFT

(45) Veröffentlichungstag der Patentschrift : **10.08.94 Patentblatt 94/32**

(51) Int. Cl.$^5$ : **C08G 8/08,** C07C 39/12, B27N 1/00

(21) Anmeldenummer : **91910555.1**

(22) Anmeldetag : **11.06.91**

(86) Internationale Anmeldenummer : **PCT/EP91/01087**

(87) Internationale Veröffentlichungsnummer : **WO 91/19749 26.12.91 Gazette 91/29**

(54) **PHENOLHARZ, VERFAHREN ZU SEINER HERSTELLUNG UND VERWENDUNG.**

(30) Priorität : **13.06.90 DE 4018863**
**05.10.90 DE 4031575**

(43) Veröffentlichungstag der Anmeldung : **31.03.93 Patentblatt 93/13**

(45) Bekanntmachung des Hinweises auf die Patenterteilung : **10.08.94 Patentblatt 94/32**

(84) Benannte Vertragsstaaten : **AT CH DE LI**

(56) Entgegenhaltungen :
**EP-A- 0 001 580**
**EP-A- 0 081 147**
**EP-A- 0 147 538**
**DE-A- 2 437 131**
**US-A- 3 000 847**

(73) Patentinhaber : **HOECHST AKTIENGESELLSCHAFT**
**D-65926 Frankfurt (DE)**

(72) Erfinder : **SCHUREN, Gerardus, Wilhelmus**
**Heideweg 32**
**NL-6097 BT Heel (NL)**

EP 0 533 722 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Phenolharz, auf ein Verfahren zur Herstellung dieses Harzes und auf seine Verwendung zur Herstellung von Formkörpern mit einem gepreßten Kern aus festen, inerten Teilchen, die von dem hitzegehärteten Phenolharz umgeben sind.

Ein solcher Formkörper wird als dekorative Bauplatte in der EP-A-0 081 147 (US-A-4,503,115) beschrieben. Sie besteht aus einem gepreßten Kern aus Holzfasern, die von hitzegehärtetem Phenol-Formaldehyd-Harz umgeben sind. Zur Herstellung dieses Formkörpers werden die Holzfasern mit einer wäßrigen alkalischen Lösung des hitzehärtbaren Phenol-Formaldehyd-Harzes beschichtet oder imprägniert und die beschichteten Holzfasern in der Hitze verpreßt, wobei das Harz aushärtet.

Dieses Verfahren zeigt verschiedene Nachteile. So muß die Lösung des Phenol-Formaldehyd-Harzes in einer Vorstufe aus den Einzelkomponenten getrennt hergestellt werden. Das Lösungsmittel für das noch lösliche Phenol-Formaldehyd-Harz mußin einer besonderen Verfahrensstufe vor dem Verpressen von den Holzfasern entfernt werden. Hierbei besteht die Gefahr, daß zusammen mit dem Lösungsmittel auch flüchtige niedermolekulare Umsetzungsprodukte von Phenol und Formaldehyd und noch nicht umgesetztes Phenol und Formaldehyd entfernt werden. Infolgedessen ist eine aufwendige Reinigur des Abwassers und der Abluft erforderlich. Das Entfernen von nicht umgesetztem relativ teuren Ausgangsmaterial führt außerdem wegen der niedrigen Ausbeute zu einer Verteuerung des Verfahrens.

Es ist auch bekannt, eine Mischung aus den zu verpressenden inerten Teilchen und einem festen Phenolharz bei erhöhter Temperatur zu einem Formkörper unter vollständiger Vernetzung des Phenolharzes zu verpressen (EP-A-0 035 133). Es hat sich jedoch gezeigt, daß die üblichen festen Phenolharze bei der abschließenden Hitzeverpressung der inerten Teilchen zur Bildung des Formkörpers ungleichmäßig fließen und sich ungleichmäßig zwischen den inerten Teilchen verteilen, so daß das Phenolharz auch im resultierenden Produkt nicht homogen verteilt ist. Zur Vermeidung dieses Nachteils besteht zwar die Möglichkeit, das Fließverhalten des festen Phenolharzes durch Additive zu verbessern. Diese Maßnahme ist allerdings relativ aufwendig und führt nicht immer zu dem erwünschten Erfolg.

Es ist deshalb Aufgabe der Erfindung, ein hitzhärtbares Phenolharz vorzuschlagen, welches bei der Herstellung von Formkörpern aus inerten Teilchen und hitzegehärtetem Phenolharz nicht zu den aufgezeigten Problemen führt.

Zur Lösung dieser Aufgabe wird erfindungsgemäß das Phenolharz mit den Merkmalen des Anspruchs 1 vorgeschlagen. Es ist hergestellt durch Umsetzung von phenolischen Verbindungen mit Formaldehyd, vorzugsweise in wäßriger Lösung und/oder mit einer Formaldehyd abspaltenden Verbindung, in Gegenwart eines die Reaktion beschleunigenden basischen Katalysators. Vorzugsweise werden solche phenolischen Verbindungen eingesetzt, die mit Wasser kein azeotropes Gemisch bilden. Es sind insbesondere Verbindungen auf Basis von Bisphenol. Bei der Reaktion bildet Formaldehyd Methylolgruppen am phenolischen Kern ("methylolation"). Als Katalysator werden insbesondere Alkaliund Erdalkali-Oxide, ihre Hydroxide und ihre Carbonate, aber auch Metalloxide wie z.B. Zinkoxid oder Magnesiumoxid eingesetzt. Bevorzugt werden Bariumhydroxid, Calciumoxid, Natriumhydroxid, Lithiumhydroxid und Kaliumhydroxid verwendet. Die Zugabe des Katalysators erfolgt als Feststoff oder in wäßriger Lösung zu der vorzugsweise auf 50 bis 100 °C erhitzten Mischung aus phenolischer Verbindung und Formaldehyd-Lösung und/oder Formaldehyd abgebender Verbindung vor Beginn der Reaktion.

Gegebenenfalls werden weitere bei der Herstellung von Phenolharzen übliche Additive wie Farbpigmente, Hydrophobierungsmittel, Flammschutzmittel wie Ammoniumphosphat oder Aluminiumtrihydrat, Additive zur Verbesserung der Hitzebeständigkeit der phenolischen Verbindungen, Additive zum Binden von nicht umgesetztem Formaldehyd wie Harnstoff, Ammoniak oder 2-Hydroxy-alkanolamine und/oder Additive zur Verminderung der Klebrigkeit wie Wachse oder Trennmittel zugesetzt. Fließmittel sind dagegen im allgemeinen nicht erforderlich, weil das Phenolharz ein sehr gutes Fließverhalten zeigt und sich bei der erfindungsgemäßen Verwendung homogen mit den Teilchen mischt. Zweckmäßigerweise werden die genannten Additive dem Phenolharz erst nach der Reaktion des Formaldehyds zugefügt.

Nach der Zugabe des Formaldehyds bzw. nach der Abspaltung des Formaldehyds wird die Herstellung des Phenolharzes in einer frühen Phase unterbrochen, ohne daß es praktisch zu einer Vorkondensation kommt. Die Kettenmoleküle im Phenolharz sind deshalb sehr kurz und bestehen nahezu ausschließlich aus Molekülen mit noch nicht miteinander vernetzten Phenolkernen. Der Molekulargewichtsbereich des erfindungsgemäßen vorkondensierten Phenolharzes ist infolgedessen auch sehr eng und überschreitet bei Verwendung von Bisphenol A gewöhnlich nicht den Wert von 459 Dalton, während auf übliche Weise vorkondensierte Phenolharze Moleküle mit einem Molekulargewicht von weit über 1000 Dalton enthalten.

Diese durch die Reaktion erzielte Molekülstruktur des Phenolharzes wird am Besten durch das Verhältnis der Anzahl an verbleibenden reaktionsfähigen Stellen (A) zur Anzahl der kondensierten Stellen in den phenolischen Komponenten (C) ausgedrückt. Dieses Verhältnis beträgt maximal 1 zu 0,05, vorzugsweise höchstens 1:0,02. Dieses Verhältnis drückt aus, daß nur ein verschwindend kleiner Bruchteil der phenolischen Moleküle des Ausgangsmaterials mit einem weiteren phenolischen Kern über eine Methylengruppe kondensiert ist. Ein weiteres wichtiges Mengenverhältnis zur Beschreibung der Molekülstruktur des Phenolharzes ist das Verhältnis der Anzahl an verbleibenden reaktionsfähigen Stellen in den phenolischen Komponenten zur Anzahl der Stellen in den phenolischen Komponenten, an denen Formaldehyd in Form einer Methylolgruppe addiert ist. Dieses Verhältnis liegt im Bereich 1 zu 0,85 bis 1 zu 1,0. Hieraus ergibt sich, daß im Phenolharz im äußersten Fall etwa die Hälfte aller reaktionsfähigen Stellen in den phenolischen Kernen mit Formaldehyd reagiert hat (Verhältnis 1:1). Im allgemeinen überwiegt jedoch noch die Anzahl der reaktionsfähigen Stellen.

Zur Messung dieser Verhältnisse wird die Protonen-NMR-Spektroskopie herangezogen, wobei die Messung in deuteriertem Aceton, Standard TMS, mit 200 MHz erfolgt. Die reaktiven Stellen befinden sich in der 2- und 4-Stellung der phenolischen Kerne, z.B. im Bisphenol-Molekül:

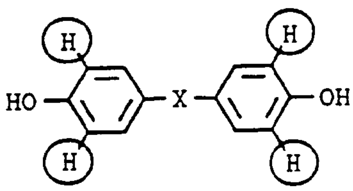

1.

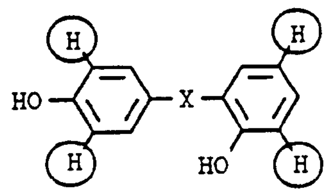

2.

Es wird über die Fläche der Peaks integriert, die von den Protonen an den reaktiven Stellen hervorgerufen werden. Die Stufenhöhe der Integrationskurve auf dem NMR-Spektrum ist ein Maß für die Gesamtzahl der reaktiven Stellen im Phenolharz und wird mit dem Wert 1 festgesetzt. Die Protonen an den reaktiven Stellen ergeben im NMR-Spektrum Peaks (Dublett) bei 6,6 is 6,8 ppm, während die Peaks der Protonen an den nichtreaktiven Stellen bei 6,9 bis 7,3 ppm liegen.

An den Stellen der phenolischen Kerne der phenolischen Verbindungen, an denen Formaldehyd addiert ist, befindet sich eine $HO-CH_2$-Gruppe. Die Stufenhöhe der Integrationskurve auf dem NMR-Spektrum über die Peaks der $CH_2$-Protonen muß durch zwei geteilt werden und ist dann ein Maß für die Anzahl der Stellen, an denen Formaldehyd addiert ist. Dieser Wert (halbe Stufenhöhe) ist maximal gleich dem Wert der Stufenhöhe der Integrationskurve über die Protonenpeaks an den reaktiven Stellen und beträgt mindestens 85 % dieses Wertes. Die Peaks dieser $CH_2$-Protonen liegen bei 4,6 bis 4,8 ppm.

Schließlich wird als Maß für die Zahl der über $CH_2$-Brücken verknüpften phenolischen Kerne die Fläche des von diesen $CH_2$-Protonen ausgelösten Peaks herangezogen. Dieser Peak liegt im Spektrum bei 4,8 bis 5,0 ppm. Um das molare Verhältnis korrekt anzugeben, muß der Integralwert für diese Fläche ebenfalls durch 2 geteilt werden, da sich auch diese Fläche auf 2 Protonen bezieht. Die halbe Stufenhöhe für diese Integrationskurve ist äußerst gering und beträgt maximal 5 %, insbesondere maximal 2 % der Stufenhöhe der Integrationskurve über die Protonenpeaks für die reaktiven Stellen. Sie ist durch NMR-Spektroskopie gerade noch oder nicht mehr nachweisbar. Daraus ergibt sich, daß Kondensationsprodukte nur in sehr geringem Umfang vorhanden sind.

Wurden zur Herstellung des Phenolharzes anstelle oder zusätzlich zu Bisphenol andere phenolische Verbindungen eingesetzt, insbesondere Nebenprodukte und Reaktionsrückstände, die üblicherweise bei der Synthese von Bisphenol entstehen, so wird zum quantitativen Vergleich der reaktionsfähigen Stellen, der Stellen mit Methylolgruppen und der Zahl der Verknüpfungen von phenolischen Kernen in gleicher Weise ein NMR-Spektrum herangezogen. Es wird in analoger Weise über die Fläche der Peaks der verschiedenen Protonen integriert und die Stufenhöhe der Integrationskurven miteinander verglichen. Da für die Beschreibung der molekularen Struktur des Phenolharzes keine absoluten Werte sondern nur molare Vergleichswerte für die interessierenden Stellen der Moleküle erforderlich sind, ist die beschriebene Meßmethode ausreichend genau.

Das Phenolharz ist bis zur Weiterverarbeitung einige Wochen bei Raumtemperatur lagerfähig, bei Kühlung unter 10 °C sogar für mehrere Monate. Es ist aber auch möglich, das Phenolharz noch im heißen Zustand sofort weiterzuverarbeiten, z.B. entsprechend der erfindungsgemäßen Verwendung in einem kontinuierlichen Prozeß bis zur Herstellung von Prepregs oder Vorpreßlingen.

Gegenstand der Erfindung ist ferner das Verfahren zur Herstellung des Phenolharzes nach Anspruch 6.

Im Unterschied zu dem Verfahren nach DE-A-2437 131 wird nach dem Verfahren der Erfindung eine Mischung aus phenolischen Verbindungen und Aldehyd, insbesondere Formaldehyd und/oder Formaldehyd abspaltender Verbindung sowie Katalysator und gegebenenfalls weitere bei der Phenolharzherstellung übliche

Additive nur 2-10 Min. lang bei mindestens 60, insbesondere bei 60 bis 105 °C erhitzt. Das Verhältnis des Gesamtgewichts der phenolischen Verbindungen, insbesondere aus Bisphenol und der gegebenenfalls zusätzlich vorhandenen Nebenprodukte der Bisphenolherstellung, zum Gewicht des Aldehyds, insbesondere Formaldehyds, liegt im Bereich von 1:0,1 bis 1:6, vorzugsweise 1:0,2 bis 1:1.

Zur Herstellung des Phenolharzes werden die Ausgangsverbindungen gemischt und die Mischung zunächst auf 50 bis 100 °C erhitzt. Die erhitzte Mischung wird vorzugsweise kontinuierlich einem Reaktor zugeführt, z.B. einem Rohrreaktor, der nach dem "Prop-Flow"-Verfahren arbeitet, oder einem Mehrtankkaskade-Reaktor. Gleichzeitig wird zur Auslösung der Reaktion der Katalysator über eine getrennte Zuleitung in den Reaktor eingeleitet. Das Ausmaß der Reaktion wird in erster Linie durch die Verweilzeit der erhitzten Mischung gesteuert. Bei einer Temperatur von 90 bis 100 °C ist die Verweildauer gewöhnlich 2 bis 6 Minuten. Es ist jedoch auch möglich, das Verfahren taktweise durchzuführen. In diesem Fall ist allerdings darauf zu achten, daß die Aufheiz- und Abkühlphase möglichst schnell ablaufen, um eine weitergehende Kondensation zu vermeiden.

Geeignete Bisphenole sind in Ullmann, 4. Auflage, 18, S. 215 ff. beschrieben. Bisphenole sind Bis(hydroxyaryl)alkane. Besonders bevorzugt sind Bis(hydroxyphenyl)alkane mit 1 bis 6, insbesondere 1 bis 4 C-Atomen in der Alkankette. Die Hydroxygruppe im Hydroxyphenylrest befindet sich in 2- und/oder 4-Stellung. Der Hydroxyphenylrest ist gegebenenfalls durch eine oder zwei niedrige Alkylgruppen, insbesondere mit 1 bis 3 C-Atomen, in der 3- und/oder 5-Stellung substituiert. Auch Cycloalkyl-Reste mit 5 bis 8 C-Atomen, insbesondere 6 C-Atomen, sind geeignet. Beispiele für diese Verbindungen sind

2,2'-Bis(4-hydroxyphenyl)butan, bzw. -propan

2,2'-Bis(3-methyl-4-hydroxyphenyl)butan bzw. -propan

Diese Verbindungen entstehen durch Kondensation von 1 Mol Keton, wie z.B. Aceton oder Cyclohexanon, oder Aldehyd mit 2 Mol Phenol-Verbindungen, welche gegebenenfalls mit einer oder zwei niedrigen Alkylgruppen substituiert sind.

Das Bisphenol wird gewöhnlich nicht in reiner Form, sondern mit den Nebenprodukten und Reaktionsrückständen, die üblicherweise bei seiner Synthese entstehen, eingesetzt. Diese Reaktionsrückstände enthalten weitere phenolische Verbindungen, die mit Formaldehyd zu nicht schmelzbaren Harzen reagieren.

Als schwer- bzw. nichtflüchtige Nebenprodukte entstehen z.B. bei der Umsetzung von Aceton und Phenol das isomere Bisphenol 2-(2-hydroxyphenyl)-2-(4-hydroxyphenyl)propan und die mit den Strukturformeln (a), (b), (c) dargestellten Chroman-Derivate

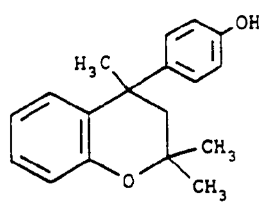

(a)

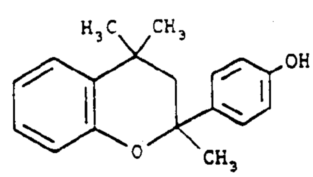

(b)

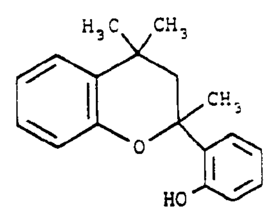

(c)

die mit den Formeln (d) und (e) erläuterten Indan-Derivate

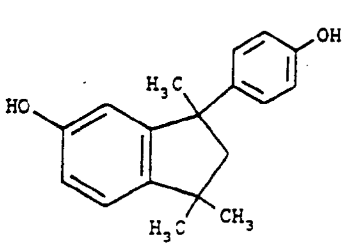

(d)

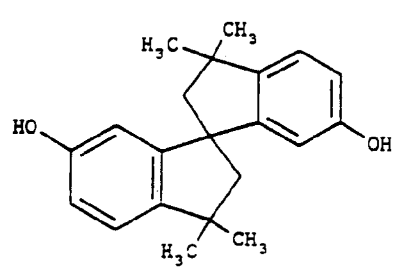

(e)

sowie Trisphenol mit der Formel (f)

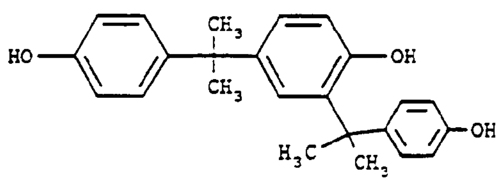

(f)

Als weitere schwer- bzw. nichtflüchtige Nebenprodukte enthalten die Reaktionsrückstände der Bisphenolherstellung noch geringe Mengen an Phenolpolymeren, aromatischen Feststoffen wie Dimethylxanthen sowie weiteren Rückständen. Auch nicht umgesetztes Phenol kann in geringer Menge vorhanden sein.

Der Anteil des Bisphenols an der Gesamtmischung aus Bisphenol und Nebenprodukten ist gewöhnlich geringer als 80 Gew.-%, kann aber auch unter 50 Gew.-% liegen. Es ist sogar möglich, das zur Herstellung von gewissen Polymeren wie Polycarbonaten erforderliche Bisphenol A weitgehend, d.h. bis auf 10 %, insbesondere bis auf 30 bis 40 %, zu entfernen und das restliche Bisphenol A zusammen mit den z.B. für die Polycarbonatherstellung nicht brauchbaren Nebenprodukten, insbesondere mit dem Rückstand als die phenolische Komponente des Bindemittels zu verwenden. Hierzu wird der Rückstand entweder im grob zerkleinerten Zustand oder als Schmelze eingesetzt.

Geeignete Formaldehyd abgebende Stoffe sind beispielsweise Paraformaldehyd, 1,3,5-Trioxan (Metaformaldehyd), Hexamethylentetramin und Oxazolidine wie z.B. 4,4-Dimethyloxazolidin, aber auch Verbindungen mit Methylolgruppen, die sich bei erhöhter Temperatur nach der Gleichung $RCH_2OH \rightarrow RH + HCHO$ zersetzen. Besonders bevorzugt sind wäßrige Formaldehyd-Lösungen, vorzugsweise mit 25 bis 60, insbesondere 35 bis 55 Gew.-% Formaldehyd-Gehalt und Paraformaldehyd als Formaldehyd abspaltende Verbindung.

Nach der Umsetzung des Bisphenols und gegebenenfalls der bei der Bisphenol-Herstellung anfallenden Nebenprodukte mit Formaldehyd zeigt das entstandene Phenolharz normalerweise einen Wassergehalt zwischen 1 und 40 Gew.-%. Da diese phenolischen Komponenten mit Wasser kein azeotropes Gemisch bilden, werden in dem nachfolgenden Trocknungsprozeß nur kleine Mengen Formaldehyd abgetrennt, so daß eine relativ einfache Reinigung des Abwassers und der Abluft möglich ist.

Die zugesetzte Katalysatormenge wird in Abhängigkeit von der Menge an phenolischen Kernen der phenolischen Verbindungen eingestellt. Je Mol an phenolischem Kern wird 0,01 bis 0,1 Mol an basischem Katalysator zugesetzt, z.B. zu Bisphenol 0,02 bis 0,2 Mol einer der oben als Katalysator genannten Verbindungen.

Gegenstand der Erfindung ist auch die Verwendung des vorkondensierten Phenolharzes nach Anspruch 11 und das bei der Verwendung erhaltene Produkt (Anspruch 14). Hierbei wird ein Formkörper mit einem gepreßten Kern aus festen inerten Teilchen hergestellt, die von hitzegehärtetem Phenolharz umgeben sind. Das Phenolharz wird im festen Zustand oder in wäßriger Lösung oder Dispersion mit den inerten Teilchen gemischt, gegebenenfalls getrocknet und anschließend die erhaltene Harz/Teilchenmischung unter Hitzeeinwirkung zu dem Kern des Formkörpers verpreßt, wobei das Phenolharz vollständig aushärtet.

Das Phenolharz der Erfindung zeichnet sich durch ein ausgezeichnetes Fließverhalten beim Verpressen aus. Die inerten Teilchen werden gleichmäßig vom Phenolharz umgeben. Durch die gleichmäßige Verteilung des Harzes im resultierenden Formkörper zeigt das Endprodukt verringerte Wasseraufnahme und Quellung, d.h., die hygrischen Eigenschaften der Formkörper sind, verglichen mit Produkten gemäß Stand der Technik, wesentlich verbessert. Auf die Kernschicht aufgebrachte Dekorschichten sind besonders stoßfest und zeigen gute Haftung zur Kernschicht. Diese Eigenschaften sind von besonderer Bedeutung, wenn der Formkörper als Fassadenverkleidungsplatte eingesetzt wird.

Das verbesserte Fließverhalten des Harzes hat weiterhin die Folge, daß - verglichen mit Platten mit gleich guten mechanischen Eigenschaften - für die Herstellung der erfindungsgemäßen Formkörper weniger Harz gebraucht wird. Durch den höheren Anteil an inerten Teilchen erhält der Formkörper verbesserte Eigenschaften hinsichtlich Elastizität und Biegefestigkeit (verbesserte mechanische Eigenschaften).

Die hygrischen und mechanischen Eigenschaften der Formkörper werden durch die Härtung der Phenolharze (Crosslinking oder Vernetzung) beeinflußt. Figur 1 zeigt die Abhängigkeit der mechanischen (Kurve 1) und hygrischen (Kurve 2) Eigenschaften von der Härtungszeit. Mit zunehmender Härtungszeit, d.h. mit zunehmender Härtung, verbessern sich zunächst die mechanischen Eigenschaften (vgl. Kurve 1; dargestellt als E-Modul und Biegefestigkeit) drastisch, durchlaufen ein Maximum, um dann, mit weiter zunehmender Härtungszeit, wieder abzufallen. Demgegenüber verbessern sich die hygrischen Eigenschaften (vgl. Kurve 2; dargestellt als Quellung und Wasseraufnahme) zunächst mit zunehmender Härtung kontinuierlich und nähern sich dann im oberen Härtungsbereich asymptotisch einem Grenzwert an.

Durch Verwendung der erfindungsgemäßen Harze lassen sich insbesondere die hygrischen Eigenschaften der Formkörper deutlich verbessern. Durch Variation der Härtungszeit lassen sich dann gleichfalls die mechanischen Eigenschaften verbessern. Dies wird anhand der Figur 2 näher erläutert. Figur 2 zeigt einen Vergleich der mechanischen und hygrischen Eigenschaften zwischen Formkörpern, die einerseits mit üblichen Harzen (s. Kurven 1 in Figur 2) und andererseits mit den erfindungsgemäßen Harzen hergestellt werden (s. Kurven 2 in Figur 2). So kann man

a) bei gleichbleibender Härtung (Härtungszeit) durch Verwendung der erfindungsgemäßen Harze eine Verbesserung der hygrischen Eigenschaften realisieren (s. Abstand a) in Figur 2) oder

b) bei gleichbleibenden hygrischen Eigenschaften durch eine kürzere Härtungszeit eine deutliche Verbesserung der mechanischen Eigenschaften erreichen (s. Abstand b) in Figur 2) oder

c) durch Kombination von erfindungsgemäßem Harz und Variation der Härtungszeit sowohl die mechanischen als auch die hygrischen Eigenschaften der Formkörper verbessern.

Formkörper mit verbesserten hygrischen Eigenschaften gemäß a) sind charakterisiert durch ein E-Modul (DIN 53452) von größer gleich 8.000 $N/mm^2$, insbesondere von 8.000 bis 10.000 $N/mm^2$, einer Biegefestigkeit (DIN 53452) von 100 bis 120 $N/mm^2$, insbesondere größer gleich 110 $N/mm^2$, einer Quellung (DIN 53799) von 1 bis 3 %, insbesondere kleiner gleich 2 % und einer Wasseraufnahme (DIN 53799) von kleiner gleich 1 %, insbesondere 0,5 bis 1 %.

Förmkörper mit verbesserten mechanischen Eigenschaften gemäß b) sind charakterisiert durch ein E-Modul (DIN 53452) von größer gleich 10.000 $N/mm^2$, insbesondere 10.000 bis 12.000 $N/mm^2$, einer Biegefestigkeit (DIN 53452) von größer gleich 140 $N/mm^2$, insbesondere 140 bis 180 $N/mm^2$, einer Quellung (DIN 53799) von 2 bis 4 %, insbesondere kleiner gleich 3 % und einer Wasseraufnahme (DIN 53799) von 1 bis 2 %, insbesondere kleiner gleich 1,5 %.

Durch die besseren hygrischen Eigenschaften bei Verwendung des erfindungsgemäßen Harzes ist es möglich, unter Beibehaltung der hygrischen Eigenschaften den Harzgehalt zu reduzieren. Die Harzeinsparung hat eine beträchtliche Materialkostenreduzierung zur Folge. Gleichzeitig hat dies den Vorteil, daß der Faseranteil der Platte zunimmt, wodurch die Platten höhere, d.h. bessere mechanische Eigenschaften bekommen.

In Figur 3 sind die Verbesserungsmöglichkeiten schematisch dargestellt. Man erkennt deutlich, daß beim Übergang von einem üblichen Harz zu einem erfindungsgemäßen Harz die hygrischen Eigenschaften verbessert werden. Reduziert man den Harzgehalt von 31 auf 25 % und verwendet ein erfindungsgemäßes Harz, so bleiben die hygrischen Eigenschaften im wesentlichen konstant und die mechanischen Eigenschaften verbessern sich sprunghaft.

Die bei der Verwendung des Phenolharzes eingesetzten festen inerten Teilchen auf Basis von Holz, Cellulose, Kunststoff oder anorganischem Material, z.B. Gesteinspulver oder -fasern reagieren mit dem Phenolharz nicht oder nur in geringem Maß und werden unter dem bei der Verpressung auftretenden Druck praktisch nicht verformt. Die Teilchen werden zusammen mit dem Phenolharz in der Hitze verpreßt. In bevorzugter Ausführungsform bestehen die Teilchen aus Holzfasern, Hemicellulosefasern und/oder Cellulosefasern, insbesondere aus Holzfasern mit 0 bis 40 Gew.-% Cellulosefasern, bezogen auf das Gesamtgewicht der Fasern. Die Holzfasern werden hergestellt aus Holzarten, die eine Zerfaserung erlauben. Zur Herstellung von Holzfasern wird das Holz in einer Mühle zu Holzschnitzeln zerkleinert, die erhaltenen Holzschnitzel mit Wasserdampf unter einem Wasserdampfdruck von 1 bis 10 bar in wenigen Minuten erweicht und anschließend, z.B. zwischen zwei beweglichen Scheiben, zu Holzfasern zerkleinert. Die erhaltenen Holzfasern werden vor oder nach dem Vermischen mit dem Phenolharz vorzugsweise auf einen Wassergehalt von kleiner als 10 % getrocknet. Die faserförmigen inerten Teilchen, insbesondere die Holzfasern und Cellulosefasern haben eine Länge von 0,3 bis 20 mm, eine mittlere Länge von 0,5 bis 3 mm und einen mittleren Durchmesser von 0,025 bis 0,05 mm. Der Durchmesserbereich liegt im Bereich von 0,01 bis 1 mm.

Zusätzlich zu oder anstelle von Holzfasern können auch gröbere Lignocellulose enthaltende Teilchen wie Holzspäne, Holzmehl, Holzschliff oder Teilchen von anderen Naturprodukten wie Baumwolle, Stroh und dergleichen verwendet werden, wie sie z.B. in der Industrie oder in holzverarbeitenden Werkstätten als Abfall anfallen. Ebenso können zusätzlich zu oder anstelle von Holzteilchen Kunststoffteilchen, z.B. in Form von Granulat oder Fasern, eingesetzt werden. Celluloseteilchen werden durch chemischen Aufschluß von Holzfasern erhalten, wobei wasserlösliche Anteile im Holz sowie die Lignocellulose entfernt wird.

Auch Papiere, z.B. Natronkraftpapier oder Vliesstoffe können für die erfindungsgemäße Verwendung des Phenolharzes eingesetzt werden.

Der Anteil des mit den inerten Teilchen vermischten Phenolharzes beträgt gewöhnlich 15 bis 90, insbesondere 20 bis 60 Gew.-%, bezogen auf das Gewicht der eingesetzten inerten Teilchen.

Die Herstellung der Mischung aus Phenolharz und inerten Teilchen erfolgt z.B. in einer Knetmaschine oder einer Mühle, oder beim Verlassen der Zerfaserungsvorrichtung in einem turbulenten Wasserdampfstrom. Das Vermischen des Phenolharzes mit den inerten Teilchen erfolgt bei einer Temperatur, bei der praktisch noch keine weitere Kondensation eintritt.

Zur Verpressung der Harz/Teilchenmischung unter Ausbildung eines flächenförmigen Formkörpers werden wegen der leichteren Handhabung zweckmäßigerweise in einer Vorstufe vorverdichtete und vorgeformte flächenförmige Prepregs eingesetzt. Zur Herstellung dieser Prepregs wird die erhaltene Mischung aus Phenolharz und inerten Teilchen z.B. in eine Presse oder in eine Tiefziehanlage eingebracht und unter einem Druck von 10 bis 50, insbesondere 20 bis 40 bar sowie einer Temperatur von 10 bis 100, insbesondere 40 bis 80 °C zu platten-, tafel- oder folienförmigen vorverdichteten Prepregs vorgepreßt oder tiefgezogen. Bei Verwendung von Papieren oder Vliesstoffen werden diese mit einer wäßrigen Lösung oder wäßrigen Dispersion des Phenolharzes imprägniert und/oder beschichtet (Wasseranteil 50-70 %).

Die Mischung aus Phenolharz und den inerten Teilchen, bzw. die vorverdichteten Prepregs, bzw. mit Phenolharz versehenen Papiere oder Vliesstoffe werden anschließend in der Hitze unter dreidimensionaler Vernetzung der phenolischen Komponenten zum gewünschten Formkörper, z.B. zu Platten, Brettern, Balken, Stangen, Rohren oder Gehäusen verpreßt. Bei der Verwendung von Papieren oder Vliesstoffen wird gewöhnlich ein Stapel aus einer Vielzahl von übereinanderliegenden Papieren bzw. Vliesstoffen verpreßt. Das bei dieser Hitzeverpressung entstandene Phenolharz ist nicht mehr schmelzbar und befindet sich somit im C-Zustand. Die Temperatur wird während der Hitzeverpressung im allgemeinen so gewählt, daß praktisch eine vollständige Aushärtung des Harzes erfolgt. Sie liegt gewöhnlich bei mindestens 120, vorzugsweise 130 bis 250, insbesondere 140 bis 200 °C.

Der erforderliche Preßdruck liegt im Bereich von 5 bis 100 bar, insbesondere 20 bis 80 bar. Die Preßzeit ist abhängig von der Dicke des Formkörpers und der Temperatur und beträgt gewöhnlich 5 bis 30 min.

Als Preßvorrichtungen können Tiefziehanlagen, kontinuierlich arbeitende Walzen oder taktweise arbeitende Plattenpressen eingesetzt werden. Diese Preßvorrichtungen zeigen eine glatte oder strukturierte Preßfläche und dienen zur Herstellung von flachen Platten oder besitzen eine profilartige Preßfläche und werden zur Herstellung von Platten mit profilartiger Form, z.B. in Form von Winkeln oder gewellten Platten, verwendet.

Der unter Verwendung des Phenolharzes erhaltene Formkörper ist eine flächenhafte Platte oder Folie, deren Oberflächenform dem Anwendungszweck angepaßt ist und die zum Beispiel gewinkelte, gebogene oder plane Form aufweist. Insbesondere ist der Formkörper ein Plattenkörper mit im wesentlichen ebener Fläche. Es sind aber auch profilförmige, stangenförmige oder rohrförmige Körper herstellbar.

Der fertiggestellte Formkörper mit der obengenannten Menge an Phenolharz von 15 bis 90 Gew.-% zeigt bei Verwendung von Holz- und/oder Celluloseteilchen eine Dichte von 600 bis 1500 kg/m$^3$. In Platten- oder Folienform beträgt seine Dicke 0,5 bis 100, vorzugsweise 2 bis 40, insbesondere 2 bis 20 mm. In Abhängigkeit von der gewünschten Dicke des Formkörpers wird die Dicke der Prepregs vor der abschließenden Verpressung eingestellt.

Es ist auch möglich, die Prepregs vor dem Verpressen einoder beidseitig mit einer dekorativen Schicht aus einer Dekorfolie aus einem Gewebe, Vliesstoff, einer Kunststoff-, Papier- oder Holzfolie abzudecken, wobei die Dekorfolie mit einem hitzehärtbaren Harz, insbesondere mit einem Melamin-Formaldehydharz, bereits imprägniert ist. Zweckmäßigerweise zeigt die Dekorfolie ein Flächengewicht von 80 bis 400, insbesondere 120 bis 300 g/m$^2$. Das vorverdichtete Teilchengemisch des Prepregs wird dann zusammen mit der Dekorschicht unter den obengenannten Bedingungen in der Hitze unter Bildung eines dekorativen Formkörpers, insbesondere einer dekorativen Platte, verpreßt.

Dekorative Schichten können auch nach dem letzten Preßvorgang durch Kaschieren des Formkörpers mit entsprechenden Oberflächenfolien aufgebracht werden. Eine dekorative Oberfläche kann nachträglich insbesondere durch Lackieren des Formkörpers erzeugt werden.

Zur Herstellung von kratzfesten und gegebenenfalls besonders witterungsbeständigen Oberflächen werden mit Elektronenstrahlen vernetzbare Harze, insbesondere vernetzbare aliphatische Polyurethanharze oder Polyesterharze, auf die Oberfläche des verpreßten Formkörpers aufgebracht und anschließend vernetzt. Die erhaltene Harzschicht wird gegebenenfalls einer Druckbehandlung unterworfen. Zur Erhöhung der dekorativen Wirkung enthalten diese Harzschichten ebenfalls Füllstoffe oder Farbstoffpigmente. Die Herstellung solcher Oberflächenschichten ist in der EP-A-0 166 153 und EP-A-0 216 269 beschrieben. Es ist auch möglich, die in den beiden Druckschriften beschriebenen dekorativen Platten als Oberflächenschicht für einen folien- oder plattenförmigen Formkörper der vorliegenden Erfindung zu verwenden.

Die Erfindung wird anhand der nachfolgenden Beispiele näher erläutert.

Beispiel 1

100 Gew.-Tl. einer Mischung von phenolischen Verbindungen aus der Herstellung von 2,2′-Bis(4-hydroxyphenyl)propan (Bisphenol A) durch Umsetzung von Phenol und Aceton werden in geschmolzener Form mit 27 Gew.-Tl. Paraformaldehyd (92%ig, 8% Wasser) gemischt und die erhaltene Mischung auf 90 °C erhitzt. Die Mischung der phenolischen Verbindungen hat die folgende Zusammensetzung:

| | |
|---|---|
| 30 Gew.-Tl. | Bisphenol A |
| 16 Gew.-Tl. | 2-(2-hydroxyphenyl)-2-(4-hydroxyphenyl)propan |
| 20 Gew.-Tl. | Cromanderivate |
| 22,5 Gew.-Tl. | Indanderivate |
| 7,5 Gew.-Tl. | Trisphenol |
| 8 Gew.-Tl. | sonstige Phenololigomere |

Das heiße Gemisch wird kontinuierlich in einen Rohrreaktor gebracht. Durch eine andere Öffnung des Reaktors wird Katalysator (NaOH) zugefügt. Die mittlere Verweildauer der Mischung im Reaktor beträgt 5 Minuten, die Temperatur 100 °C. Das entstandene Phenolharz wird kontinuierlich aus dem Reaktor herausgeführt.

Aus dem NMR-Spektrum läßt sich entnehmen, daß die Anzahl der an phenolischen Kernen addierten Formaldehyd-Moleküle in bezug auf die Anzahl der noch reaktiven Stellen in den phenolischen Kernen (=100 %) etwa 90 % beträgt. Das Phenolharz enthält somit im wesentlichen Formaldehyd-Additionsprodukte von Formaldehyd mit Bisphenol A und mit Nebenprodukten der Bisphenol-Herstellung. Dagegen sind Kondensationsprodukte nur in sehr geringen Mengen vorhanden, d.h. eine Weiterreaktion von Additionsprodukten mit Bisphenol A und mit Nebenprodukten aus der Herstellung des Bisphenol A hat praktisch nicht stattgefunden (d.h.C≈0). Das Verhältnis A:B:C liegt also im Bereich 1:(0,85 bis 1,0):(Kleiner gleich 0,05).

## Beispiel 2

Beispiel 1 wird wiederholt unter Verwendung einer geschmolzenen Mischung aus 100 Gew.-Tl. der phenolischen Verbindungen aus der Herstellung von Bisphenol A durch Umsetzung von Aceton mit Phenol mit 25 Gew.-Tl. Paraformaldehyd (82%, 18% Wasser). Die Mischung der phenolischen Verbindungen hat die folgende Zusammensetzung:

| | |
|---|---|
| 20 Gew.-Tl. | Bisphenol A |
| 1 Gew.-Tl. | 2-(2-hydroxyphenyl)-2-(4-hydroxyphenyl)propan |
| 30 Gew.-Tl. | Cromanderivate |
| 28 Gew.-Tl. | Indanderivate |
| 5 Gew.-Tl. | spirobisindan |
| 5 Gew.-Tl. | Trisphenol |
| 3 Gew.-Tl. | Dimethylxanthen |
| 8 Gew.-Tl. | Di- und Trimere von Phenol |

Man erhält wie in Beispiel 1 ein Phenolharz, bei dem Formaldehyd im phenolischen Ring addiert ist. Eine Kondensation ist nur in ganz geringem Ausmaß eingetreten.

## Beispiel 3

Beispiel 1 wird wiederholt, jedoch wird der Kondensationsgrad des Harzes durch Variation der mittleren Verweilzeit der Mischung im Reaktor verändert (Einflußnahme auf das Verhältnis A:B:C).

Es werden folgende Verweilzeiten eingehalten:

a) 5 Minuten→erfindungsgemäße Harze (A:B:C = 1:0,85:0)
b) 15 Minuten→normal kondensierte Harze (A:B:C = 1:0,85:0,8)
c) 30 Minute→hoch kondensierte Harze (A:B:C = 1:0,85:2,0)

I. 900 g dieser Harze werden mit 2.000 g trockenen Holzfasern zu plattenförmigen Prepregs vorgeformt und verdichtet. Diese Prepregs werden mit Dekorbogen versehen und anschließend bei unterschiedlichen Preßzeiten in einer Presse bei 150 °C und 90 MPa Druck gepreßt.

Auf diese Weise werden unter Verwendung der oben angeführten Harze dekorative Platten in einer dicke von 8 mm hergestellt mit zunehmenden Härtungszeiten. In Tabelle 1 sind die Eigenschaften der einzelnen Platten angegeben.

II. In der gleichen Weise werden Platten hergestellt mit 700 g statt 900 g des erfindungsgemäßen Harzes bezogen auf 2.000 g trockene Holzfasern. In Tabelle 2 sind die Eigenschaften dieser Platten angegeben.

Tabelle 1

| Reaktions- zeit Harze | | 5′ | | | | | 15′ | | | | | 30′ | | | | |
|---|---|---|---|---|---|---|---|---|---|---|---|---|---|---|---|---|
| Preßzeit Min. | | 5′ | 10′ | 20′ | 30′ | 40′ | 5′ | 10′ | 20′ | 30′ | 40′ | 5′ | 10′ | 20′ | 30′ | 40′ |
| Eigenschaften | | | | | | | | | | | | | | | | |
| Dicke | Mn | 8,0 | 8,1 | 8,0 | 7,9 | 8,1 | 8,0 | 7,8 | 7,9 | 8,1 | 7,9 | 8,2 | 8,1 | 7,8 | 8,0 | 8,0 |
| Dichte | $Kg/m^3$ | 1411 | 1405 | 1401 | 1400 | 1399 | 1407 | 1403 | 1398 | 1398 | 1396 | 1402 | 1399 | 1397 | 1394 | 1393 |
| Biegef. | $N/mm^2$ | 128 | 178 | 164 | 158 | 145 | 137 | 170 | 158 | 149 | 150 | 145 | 140 | 138 | 135 | 134 |
| E-Modul | $N/mm^2 \cdot 10^3$ | 12,0 | 12,8 | 11,7 | 11,0 | 10,9 | 11,6 | 11,8 | 10,6 | 10,2 | 9,9 | 10,2 | 9,8 | 8,8 | 8,5 | 8,6 |
| Quellung | % | 10,2 | 5,7 | 2,5 | 1,9 | 1,4 | 8,5 | 4,2 | 2,6 | 2,1 | 1,8 | 5,8 | 3,4 | 2,8 | 2,7 | 2,5 |
| Wasseraufn. | % | 1,86 | 1,28 | 0,72 | 0,64 | 0,58 | 1,57 | 1,04 | 0,78 | 0,67 | 0,62 | 1,39 | 0,98 | 0,86 | 0,80 | 0,78 |

Tabelle 2

| Harzmenge g pro 2000 Holzfasern | | 900 | | | | | 700 | | | | |
|---|---|---|---|---|---|---|---|---|---|---|---|
| Preßzeit Min. | | 5' | 10' | 20' | 30' | 40' | 5' | 10' | 20' | 30' | 40' |
| Eigenschaften | | | | | | | | | | | |
| Dicke | Mm. | 8,0 | 8,1 | 8,0 | 7,9 | 8,1 | 7,8 | 7,7 | 7,9 | 7,7 | 7,8 |
| Dichte | $Kg/m^3$ | 1411 | 1405 | 1401 | 1400 | 1399 | 1408 | 1401 | 1400 | 1396 | 1394 |
| Biegef. | $N/mm^2$ | 128 | 178 | 164 | 158 | 145 | 144 | 190 | 174 | 170 | 163 |
| E-Modul | $N/mm^2 \cdot 10^3$ | 12,0 | 12,8 | 11,7 | 11,0 | 10,9 | 12,8 | 13,8 | 12,9 | 12,2 | 11,7 |
| Quellung | % | 10,2 | 5,7 | 2,5 | 1,9 | 1,4 | 12,8 | 6,7 | 2,9 | 2,2 | 1,7 |
| Was.aufn. | % | 1,86 | 1,28 | 0,77 | 0,64 | 0,58 | 2,43 | 1,56 | 0,96 | 0,82 | 0,78 |

Aus Tabelle 1 ist zu entnehmen, daß sowohl die mechanische Festigkeit (vgl. Biegefestigkeit und E-Modul) als auch die hygrischen Eigenschaften der Platten bei Verwendung der erfindungsgemäßen Harze (vgl. Spalte 5 Min) besser sind als bei Verwendung üblicher Harze (normal bzw. hochkondensierte Harze, vgl. Spalten 15 bzw. 30 Min).

Tabelle 2 zeigt, daß sogar bei Verwendung geringer Mengen des erfindungsgemäßen Harzes, die hygrischen Eigenschaften noch als gut zu bezeichnen sind, wobei sich die mechanischen Eigenschaften sprunghaft verbessern (vgl. Quellung und Wasseraufnahme sowie Biegefestigkeit und E-Modul).

Beispiel 4

900 g des nach Beispiel 2 hergestellten Harzes werden mit 2000 g Holzfasern zu plattenförmigen Prepregs vorgeformt und vorverdichtet. Die Prepregs werden beidseitig mit einem melaminimprägnierten Dekorpapier versehen und anschließend in einer Presse bei 150 °C während 20 Min. unter 80 MPa Druck verpreßt. Die Plattendicke ist 6,1 mm.

Platteneigenschaften:

| | |
|---|---|
| Biegefestigkeit | 170 N/mm$^2$ (DIN 53 452) |
| E-Modul | 12400 N/mm$^2$ (DIN 53 452) |
| Wasseraufnahme | 0,41% (2 h kochen) (DIN 53 799) |
| Kantenquellung | 1,38% (2 h kochen) (DIN 53 799) |

Beispiel 5

Die Zugabe von 9,6 Gew-% Mono/Diammoniumphosphat und 5,0 Gew.-% Aluminiumhydratpulver zu der in Beispiel 3 a)I hergestellten Mischung aus Harz/Holzfasern (=100 %) ergibt eine schwer entflammbare Platte gemäß DIN 4102 mit ansonsten unveränderten Eigenschaften (Norm ISO '92 wird erfüllt).

Beispiel 6

1000 g Bisphenol A und 515 g Formaldehyd-Lösung (50%ig) werden auf ca. 90 °C erhitzt, wobei sich das Bisphenol A löst. Diese Lösung wird einem kontinuierlichen Reaktor vom Kaskade-Typ zugeführt. In einer getrennten Zuleitung wird Katalysator (Natronlauge, 40%ig) zugeführt. Nach einer mittleren Reaktionszeit von 4 Minuten erhält man ein Phenolharz, bei dem die Zahl der reaktionsfähigen Stellen des Phenolkerns zu der Anzahl der Formaldehyd addierten Stellen zu der Anzahl der kondensierten Stellen sich verhält wie 1:0,98:0,01.

Beispiel 7

950 g Phenolharz-Lösung aus Beispiel 6 werden mit 2000 g trockenen Holzfasern homogen gemischt und hiernach mit Luft bis auf einen Wassergehalt von 2 % getrocknet. Diese Fasern werden zu einem Prepreg vorgeformt, danach beidseitig mit dekorativen Schichten versehen, wie in EP-A-0 216 269 beschrieben. Anschließend wird bei 90 bar während 15 Min. bei 150 °C verpreßt. Die so hergestellten Platten zeigen eine optimale Kombination von Eigenschaften gegen Witterungseinflüsse und mechanische Belastungen. Diese Platte ist also hervorragend geeignet für Außenanwendungen, wie z.B. als Fassadenverkleidungsplatten.

**Patentansprüche**

1. Phenolharz, dadurch gekennzeichnet, daß es aus der Umsetzung von phenolischen Verbindungen mit Formaldehyd und/oder einer Formaldehyd abspaltenden Verbindung in Gegenwart eines basischen Katalysators hergestellt ist und daß die gesamte Anzahl der reaktionsfähigen Stellen (A) an den phenolischen Kernen im Phenolharz zu der gesamten Anzahl der Stellen (B) an den phenolischen Kernen im Phenolharz, an denen Formaldehyd addiert ist, zu der gesamten Anzahl der Stellen (C) im Phenolharz, in denen zwei Moleküle der phenolischen Verbindungen über eine Methylengruppe miteinander kondensiert sind, sich verhalten wie
(A):(B):(C)=1:(0,85 bis 1,0):(kleiner gleich 0,05).

2. Phenolharz nach Anspruch 1, dadurch gekennzeichnet, daß die phenolischen Verbindungen Bisphenole umfassen.

3. Phenolharz nach Anspruch 1 oder 2 dadurch gekennzeichnet, daß die phenolische Verbindung eine solche auf Basis von Bis(hydroxyphenyl)alkan ist, welches einen geradkettigen Alkanrest mit 1 bis 6 C-Atomen oder einen Cycloalkanrest aufweist.

4. Phenolharz nach Anspruch 2 oder 3, dadurch gekennzeichnet, daß die phenolischen Verbindungen Bisphenol und weitere bei der Herstellung des Bisphenols erhaltene Nebenprodukte umfassen.

5. Phenolharz nach Anspruch 4, dadurch gekennzeichnet, daß die phenolischen Verbindungen die bei der Kondensation von Phenol und Aceton zu 2,2'-Bis(4-hydroxyphenyl)propan entstandenen Nebenprodukte umfassen.

6. Verfahren zur Herstellung von Phenolharz, dadurch gekennzeichnet, daß man eine Mischung aus phenolischer Verbindung und Aldehyd und/oder Formaldehyd abspaltender Verbindung sowie basischem Katalysator 2 bis 10 Minuten lang bei mindestens 60 °C erhitzt, so daß die gesamte Anzahl der reaktionsfähigen Stellen (A) an den phenolischen Kernen im Phenolharz zu der gesamten Anzahl der Stellen (B) an den phenolischen Kernen im Phenolharz, an denen Formaldehyd addiert ist, zu der gesamten Anzahl der Stellen (C) im Phenolharz, in denen zwei Moleküle der phenolischen Verbindungen über eine Methylengruppe miteinander kondensiert sind, sich verhalten wie
(A):(B):(C)=1:(0,85 bis 1,0):(kleiner gleich 0,05).

7. Verfahren zur Herstellung von Phenolharz, dadurch gekennzeichnet, daß man eine Mischung aus phenolischer Verbindung und Aldehyd und/oder Formaldehyd abspaltender Verbindung sowie basischem Katalysator und weitere bei der Phenolharzherstellung übliche Additive 2 bis 10 Minuten lang bei mindestens 60 °C erhitzt, so daß die gesamte Anzahl der reaktionsfähigen Stellen (A) an den phenolischen Kernen im Phenolharz zu der gesamten Anzahl der Stellen (B) an den phenolischen Kernen im Phenolharz, an denen Formaldehyd addiert ist, zu der gesamten Anzahl der Stellen (C) im Phenolharz, in denen zwei Moleküle der phenolischen Verbindungen über eine Methylengruppe miteinander kondensiert sind, sich verhalten wie
(A):(B):(C)=1:(0,85 bis 1,0):(kleiner gleich 0,05).

8. Verfahren nach Anspruch 6 oder 7, dadurch gekennzeichnet, daß die Reaktion in einem kontinuierlichen Verfahren erfolgt.

9. Verfahren nach Anspruch 8, dadurch gekennzeichnet, daß das Verfahren in einem Kaskadenmehrtank-Reaktor durchgeführt wird.

10. Verfahren nach einem der Ansprüche 6 bis 9, dadurch gekennzeichnet, daß die Formaldehyd abspaltende Verbindung Hexamethylentetramin, Paraformaldehyd, Metaformaldehyd und/oder Oxazolidine umfaßt.

11. Verfahren zur Herstellung von Formkörpern mit einem gepreßten Kern aus festen inerten Teilchen auf Basis von Holz, Cellulose, Kunststoff oder anorganischem Material, die von einem Hitzegehärteten Phenolharz gemäß einem der Ansprüche 1 bis 5 umgeben sind, wobei das Phenolharz mit den inerten Teilchen gemischt und anschließend die erhaltene Harz/Teilchenmischung unter Hitzeeinwirkung zu dem Kern des Formkörpers verpreßt wird.

12. Verfahren nach Anspruch 11, dadurch gekennzeichnet, daß man auf wenigstens einer Oberfläche des Kerns vor oder nach dem Verpressen eine dekorative Schicht aufbringt.

13. Verfahren nach Anspruch 11, dadurch gekennzeichnet, daß das Phenolharz gemäß einem der Ansprüche 1 bis 5 in wäßriger Lösung mit den inerten Teilchen gemischt wird, das Wasser entfernt und anschließend die Harz/Teilchenmischung unter Hitzeeinwirkung zu dem Kern des Formkörpers verpreßt wird.

14. Formkörper mit einem Kern aus festen, inerten Teilchen auf Basis von Holz, Cellulose, Kunststoff oder anorganischem Material, die von dem Phenolharz nach einem der Ansprüche 1 bis 5 umgeben sind.

15. Formkörper nach Anspruch 14 mit einem phenolharzumgebenden Kern aus festen, inerten Teilchen auf Basis von Holz, Cellulose, Kunststoff oder anorganischem Material, gekennzeichnet durch ein E-Modul

(DIN 53452) von größer gleich 8.000 $N/mm^2$, eine Biegefestigkeit (DIN 53452) von 100 bis 120 $N/mm^2$, eine Wasseraufnahme (DIN 53799) von kleiner gleich 1 % und eine Quellung (DIN 53799) von 1 bis 3%.

16. Formkörper nach Anspruch 14 mit einem phenolharzumgebenden Kern aus festen, inerten Teilchen auf Basis von Holz, Cellulose, Kunststoff oder anorganischem Material, gekennzeichnet durch ein E-Modul (DIN 53452) von größer gleich 10.000 $N/mm^2$, eine Biegefestigkeit (DIN 53452) von größer gleich 140 $N/mm^2$, eine Wasseraufnahme (DIN 53799) von 1 bis 2 % und eine Quellung (DIN 53799) von 2 bis 4 %.

17. Formkörper nach Anspruch 14, dadurch gekennzeichnet, daß die inerten Teilchen Holzfasern sind und daß das zur Herstellung verwendete Phenolharz/Holzfasergemisch Mono/Diammoniumphosphat- und Aluminiumhydratpulver enthält.

18. Verwendung eines Formkörpers nach Anspruch 17 als schwer entflammbare Platte gemäß DIN 4102.

## Claims

1. Phenolic resin, characterized in that it is prepared from the reaction, in the presence of a basic catalyst, of phenolic compounds with formaldehyde and/or a formaldehyde donor compound, and in that the ratio of the total number of reactive sites (A) on the phenolic nuclei in the phenolic resin to the total number of sites (B) on the phenolic nuclei in the phenolic resin, onto which formaldehyde is added, to the total number of sites (C) in the phenolic resin, in which two molecules of the phenolic compounds are condensed with one another via a methylene group, is
(A):(B):(C)=1:(0.85 to 1.0):(less than or equal to 0.05).

2. Phenolic resin according to Claim 1, characterized in that the phenolic compounds include bisphenols.

3. Phenolic resin according to Claim 1 or 2, characterized in that the phenolic compound is one based on a bis(hydroxyphenyl)alkane which has a straight-chain alkane radical having 1 to 6 C atoms or a cycloalkane radical.

4. Phenolic resin according to Claim 2 or 3, characterized in that the phenolic compounds include bisphenol and other by-products obtained in the preparation of bisphenol.

5. Phenolic resin according to Claim 4, characterized in that the phenolic compounds include the by-products formed during the condensation of phenol and acetone to give 2,2′-bis(4-hydroxyphenyl)propane.

6. Process for the preparation of a phenolic resin, characterized in that a mixture of a phenolic compound and aldehyde and/or a formaldehyde donor compound and a basic catalyst are heated at not less than 60°C for 2 to 10 minutes, such that the ratio of the total number of reactive sites (A) on the phenolic nuclei in the phenolic resin to the total number of sites (B) on the phenolic nuclei in the phenolic resin, onto which formaldehyde is added, to the total number of sites (C) in the phenolic resin, in which two molecules of the phenolic compounds are condensed with one another via a methylene group, is
(A):(B):(C)=1:(0.85 to 1.0):(less than or equal to 0.05).

7. Process for the preparation of a phenolic resin, characterized in that a mixture of a phenolic compound and aldehyde and/or a formaldehyde donor compound and a basic catalyst and other additives customary in the preparation of phenolic resins is heated at not less than 60°C for 2 to 10 minutes such that the ratio of the total number of reactive sites (A) on the phenolic nuclei in the phenolic resin to the total number of sites (B) on the phenolic nuclei in the phenolic resin, onto which formaldehyde is added, to the total number of sites (C) in the phenolic resin, in which two molecules of the phenolic compounds are condensed with one another via a methylene group, is
(A):(B):(C)=1:(0.85 to 1.0):(less than or equal to 0.05).

8. Process according to Claim 6 or 7, characterized in that the reaction is carried out in a continuous process.

9. Process according to Claim 8, characterized in that the process is carried out in a cascade multiple-tank reactor.

10. Process according to one of Claims 6 to 9, characterized in that the formaldehyde donor compound includes hexamethylenetetramine, paraformaldehyde, metaformaldehyde and/or oxazolidines.

11. Process for the production of shaped articles having a pressed core of solid inert particles based on wood, cellulose, plastic or inorganic material which are surrounded by a thermosetting phenolic resin according to one of Claims 1 to 5, wherein the phenolic resin is mixed with the inert particles and the resulting resin/particle mixture is then pressed, under the action of heat, to give the core of the shaped article.

12. Process according to Claim 11, characterized in that a decorative layer is applied to at least one surface of the core before or after pressing.

13. Process according to Claim 11, characterized in that the phenolic resin according to one of Claims 1 to 5 is mixed with the inert particles in aqueous solution, the water is removed and the resin/particle mixture is then pressed, under the action of heat, to give the core of the shaped article.

14. Shaped article having a core of solid inert particles based on wood, cellulose, plastic or inorganic material which are surrounded by the phenolic resin according to one of Claims 1 to 5.

15. Shaped article according to Claim 14 having a core, surrounded by phenolic resin, of solid, inert particles based on wood, cellulose, plastic or inorganic material, characterized by an E modulus (DIN 53452) of greater than or equal to 8,000 $N/mm^2$, a flexural strength (DIN 53452) of 100 to 120 $N/mm^2$, a water uptake (DIN 53799) of less than or equal to 1 % and a swelling (DIN 53799) of 1 to 3 %.

16. Shaped article according to Claim 14 having a core, surrounded by phenolic resin, of solid inert particles based on wood, cellulose, plastic or inorganic material, characterized by an E modulus (DIN 53452) of greater than or equal to 10,000 $N/mm^2$, a flexural strength (DIN 53452) of greater than or equal to 140 $N/mm^2$, a water uptake (DIN 53799) of 1 to 2 % and a swelling (DIN 53799) of 2 to 4 %.

17. Shaped article according to Claim 14, characterized in that the inert particles are wood fibres, and in that the phenolic resin/wood fibre mixture used for the production contains mono/diammonium phosphate powder and aluminium hydrate powder.

18. Use of a shaped article according to Claim 17 as a flame retardant sheet according to DIN 4102.

## Revendications

1. Résine phénolique caractérisée en ce qu'elle est obtenue par réaction d'un composé phénolique avec du formaldéhyde et/ou un composé capable de libérer du formaldéhyde en présence d'un catalyseur basique et en ce que le nombre total des positions réactives (A) sur les noyaux phénols de la résine phénolique, le nombre total des positions (B) sur les noyaux phénols de la résine phénolique sur lesquelles le formaldéhyde est additionné et le nombre total des positions (C) de la résine phénolique sur lesquelles deux molécules des composés phénoliques sont condensées entre elles par l'intermédiaire d'un groupe méthylène sont dans le rapport (A):-(B):(C) = 1 : (de 0,85 à 1,0) : inférieur ou égal à 0,05).

2. Résine phénolique selon la revendication 1, caractérisée en ce que les composés phénoliques comprennent des bisphénols.

3. Résine phénolique selon les revendications 1 ou 2, caractérisée en ce que le composé phénolique est un tel composé à base de bis(hydroxyphényl)alcane, qui présente un groupe alcane linéaire ayant de 1 à 6 atomes de carbone ou un groupe cycloalcane.

4. Résine phénolique selon les revendications 2 ou 3, caractérisée en ce que les composés phénoliques comprennent le bisphénol et les sous-produits obtenus lors de la préparation du bisphénol.

5. Résine phénolique selon la revendication 4, caractérisée en ce que les composés phénoliques comprennent les sous-produits apparus lors de la condensation de phénol et d'acétone pour obtenir du 2,2'-bis(4-hydroxyphényl)propane.

6. Procédé de préparation d'une résine phénolique, caractérisé en ce que l'on chauffe un mélange d'un composé phénolique et d'un aldéhyde et/ou d'un composé capable de libérer du formaldéhyde, ainsi qu'un

catalyseur basique pendant 2 à 10 minutes à une température d'au moins 60°C, de sorte que le nombre total des positions réactives (A) sur les noyaux phénols de la résine phénolique, le nombre total de positions (B) sur les noyaux phénols de la résine phénolique sur lesquelles le formaldéhyde est additionné et le nombre total des positions (C) de la résine phénolique sur lesquelles deux molécules des composés phénoliques sont condensées entre elles par l'intermédiaire d'un groupe méthylène sont dans le rapport (A):(B):(C) = 1 : (de 0,85 à 1,0) : (inférieur ou égal à 0,05).

**7.** Procédé de préparation d'une résine phénolique, caractérisé en ce que l'on chauffe un mélange d'un composé phénolique et d'un aldéhyde et/ou d'un composé capable de libérer du formaldéhyde ainsi qu'un catalyseur basique et des additifs habituels pour la préparation des résines phénoliques pendant 2 à 10 minutes à une température d'au moins 60°C, de sorte que le nombre total des positions réactives (A) sur les noyaux phénols de la résine phénolique, le nombre total de positions (B) sur les noyaux phénols de la résine phénolique sur lesquelles le formaldéhyde est additionné et le nombre total des positions (C) de la résine phénolique sur lesquelles deux molécules des composés phénoliques sont condensées entre elles par l'intermédiaire d'un groupe méthylène sont dans le rapport (A):(B):(C) = 1 : (de 0,85 à 1,0) : (inférieur ou égal à 0,05).

**8.** Procédé selon la revendication 6 ou 7, caractérisé en ce que la réaction est effectuée selon un procédé continu.

**9.** Procédé selon la revendication 8, caractérisé en ce que le procédé est mis en oeuvre dans un réacteur à plusieurs réservoirs en cascade.

**10.** Procédé selon l'une des revendications 6 à 9, caractérisé en ce que le composé capable de libérer du formaldéhyde comprend l'hexaméthylènetétramine, le paraformaldéhyde, le métaformaldéhyde et/ou l'oxazolidine.

**11.** Procédé de préparation d'un corps façonné ayant un noyau pressé formé de particules solides inertes à base de bois, cellulose, matière plastique ou de matériau inorganique qui sont enrobées d'une résine phénolique thermodurcie selon l'une des revendications 1 à 5, procédé par lequel la résine phénolique est mélangée aux particules inertes et le mélange résine/particules obtenu est ensuite pressé sous l'action de la chaleur pour former le noyau du corps façonné.

**12.** Procédé selon la revendication 11, caractérisé en ce que l'on applique sur au moins l'une des surfaces du noyau une couche décorative avant ou après le pressage.

**13.** Procédé selon la revendication 11, caractérisé en ce que la résine phénolique selon l'une des revendications 1 à 5 est mélangée aux particules inertes en solution aqueuse, l'eau est éliminée et le mélange résine/particules est finalement pressé sous l'action de la chaleur pour former le noyau du corps façonné.

**14.** Corps façonné ayant un noyau constitué de particules inertes à base de bois, cellulose, matière plastique ou matériau inorganique, qui sont enrobées de résine phénolique selon l'une des revendications 1 à 5.

**15.** Corps façonné selon la revendication 14 ayant un noyau constitué de particules inertes à base de bois, cellulose, matière plastique ou matériau inorganique, enrobé de résine phénolique, caractérisé par un module d'élasticité (norme DIN 534 52) supérieur ou égal à 8000 $N/mm^2$, une résistance à la flexion (DIN 534 52) de 100 à 120 $N/mm^2$, une absorption d'eau (DIN 53799) inférieure ou égale à 1 % et un gonflement (DIN 53799) de 1 à 3 %.

**16.** Corps façonné selon la revendication 14 ayant un noyau constitué de particules inertes à base de bois, cellulose, matière plastique ou matériau inorganique, caractérisé par un module d'élasticité (norme DIN 534 52) supérieur ou égal à 10000 $N/mm^2$, une résistance à la flexion (DIN 534 52) supérieure ou égale à 140 $N/mm^2$, une absorption d'eau (DIN 53799) de 1 à 2 % et un gonflement (DIN 53799) de 2 à 4 %.

**17.** Corps façonné selon la revendication 14, caractérisé en ce que les particules inertes sont des fibres de bois et en ce que le mélange résine phénolique/fibres de bois utilisé pour la préparation contient de la poudre de phosphate de mono/diammonium et d'hydrate d'aluminium.

**18.** Utilisation d'un corps façonné selon la revendication 17 en tant que plaque difficilement inflammable selon la norme DIN 4102.

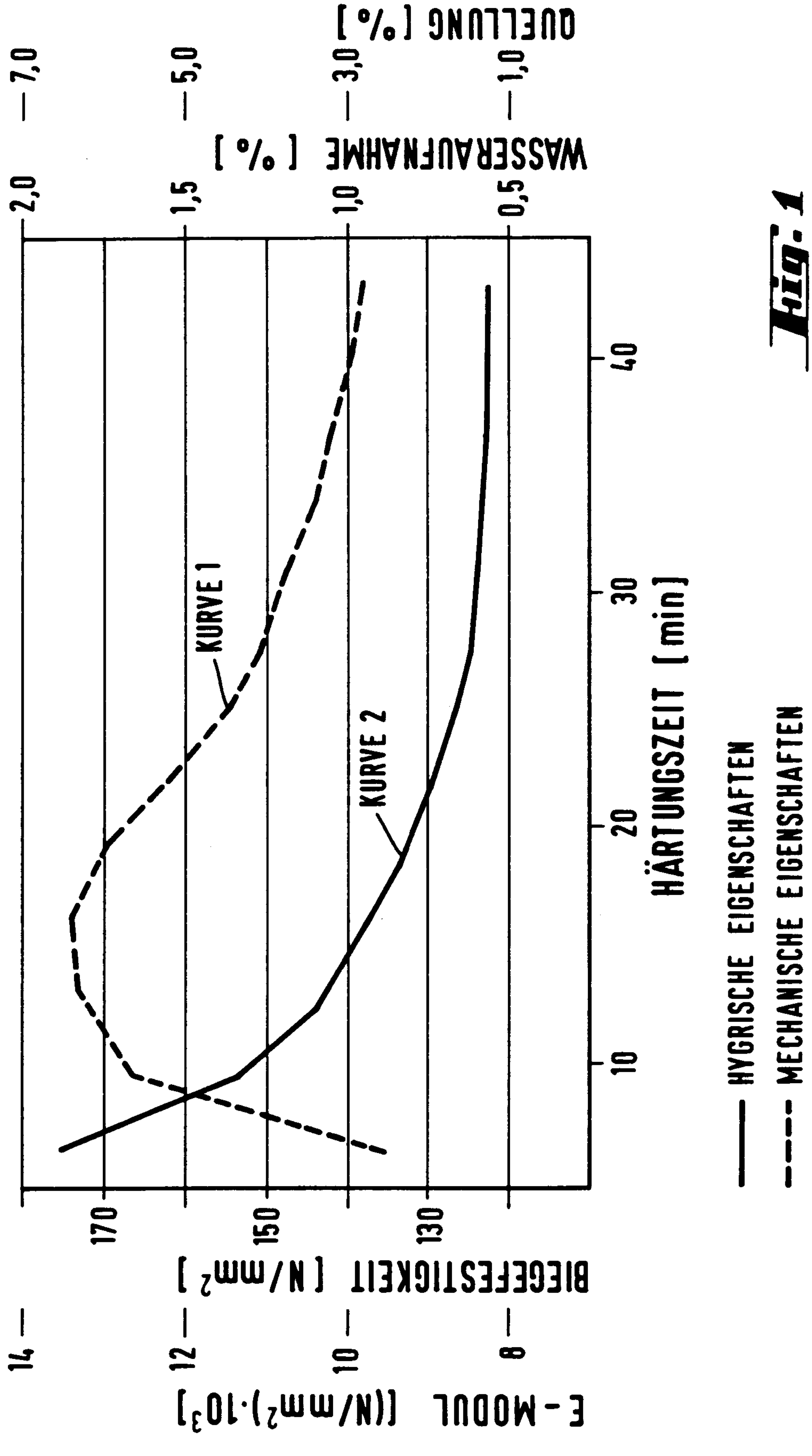
QUELLUNG [%]
7,0
5,0
3,0
1,0
WASSERAUFNAHME [%]
2,0
1,5
1,0
0,5
KURVE 1
KURVE 2
10
20
30
40
HÄRTUNGSZEIT [min]
170
150
130
BIEGEFESTIGKEIT [N/mm²]
14
12
10
8
E-MODUL ((N/mm²)·10³)
HYGRISCHE EIGENSCHAFTEN
MECHANISCHE EIGENSCHAFTEN

Fig. 1

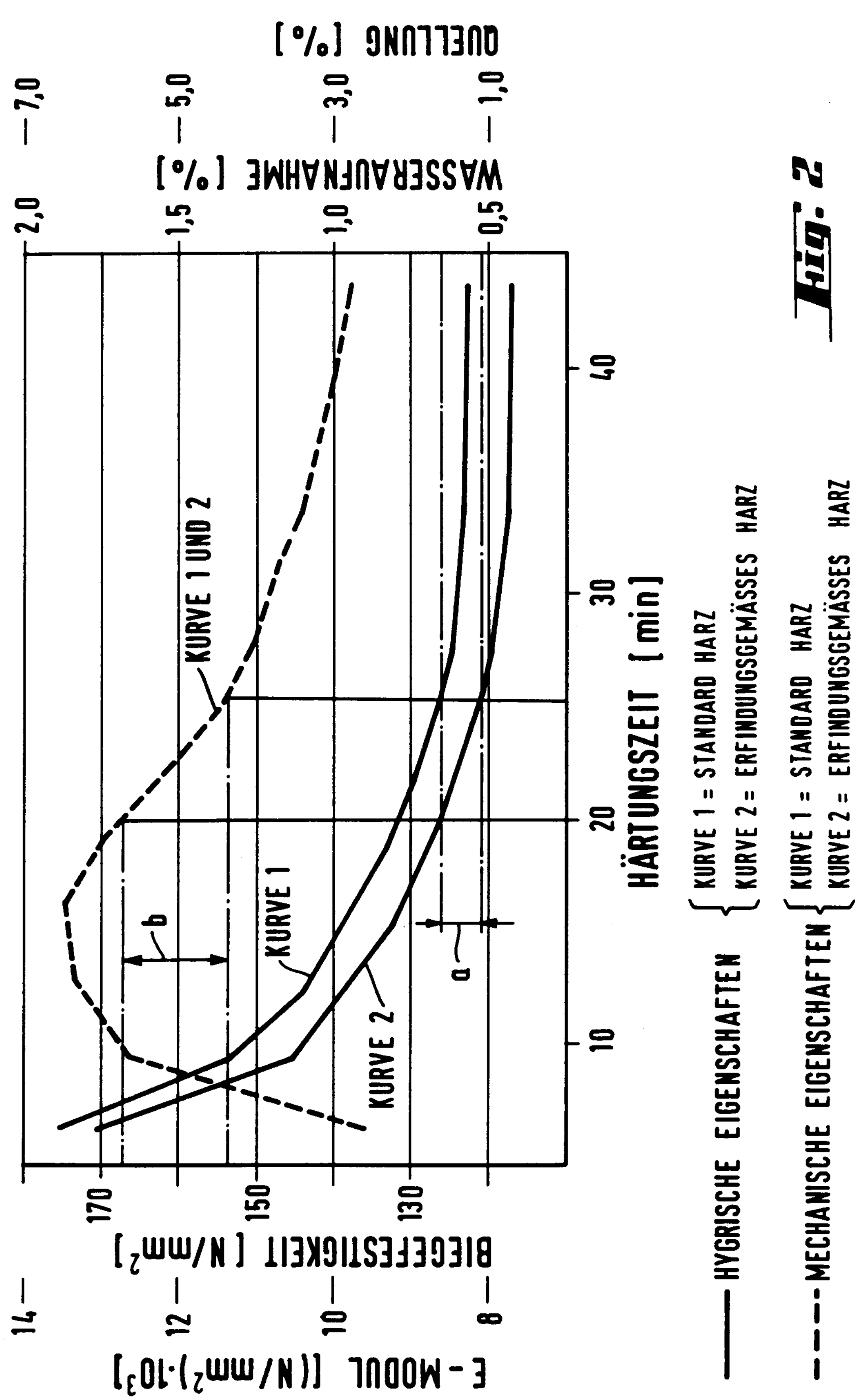
E - MODUL [(N/mm²)·10³]
14
12
10
8
BIEGEFESTIGKEIT [N/mm²]
170
150
130
WASSERAUFNAHME [%]
2,0
1,5
1,0
0,5
QUELLUNG [%]
7,0
5,0
3,0
1,0
KURVE 1 UND 2
KURVE 1
KURVE 2
b
a
10
20
30
40
HÄRTUNGSZEIT [min]
HYGRISCHE EIGENSCHAFTEN
KURVE 1 = STANDARD HARZ
KURVE 2 = ERFINDUNGSGEMÄSSES HARZ
MECHANISCHE EIGENSCHAFTEN
KURVE 1 = STANDARD HARZ
KURVE 2 = ERFINDUNGSGEMÄSSES HARZ

Fig. 2

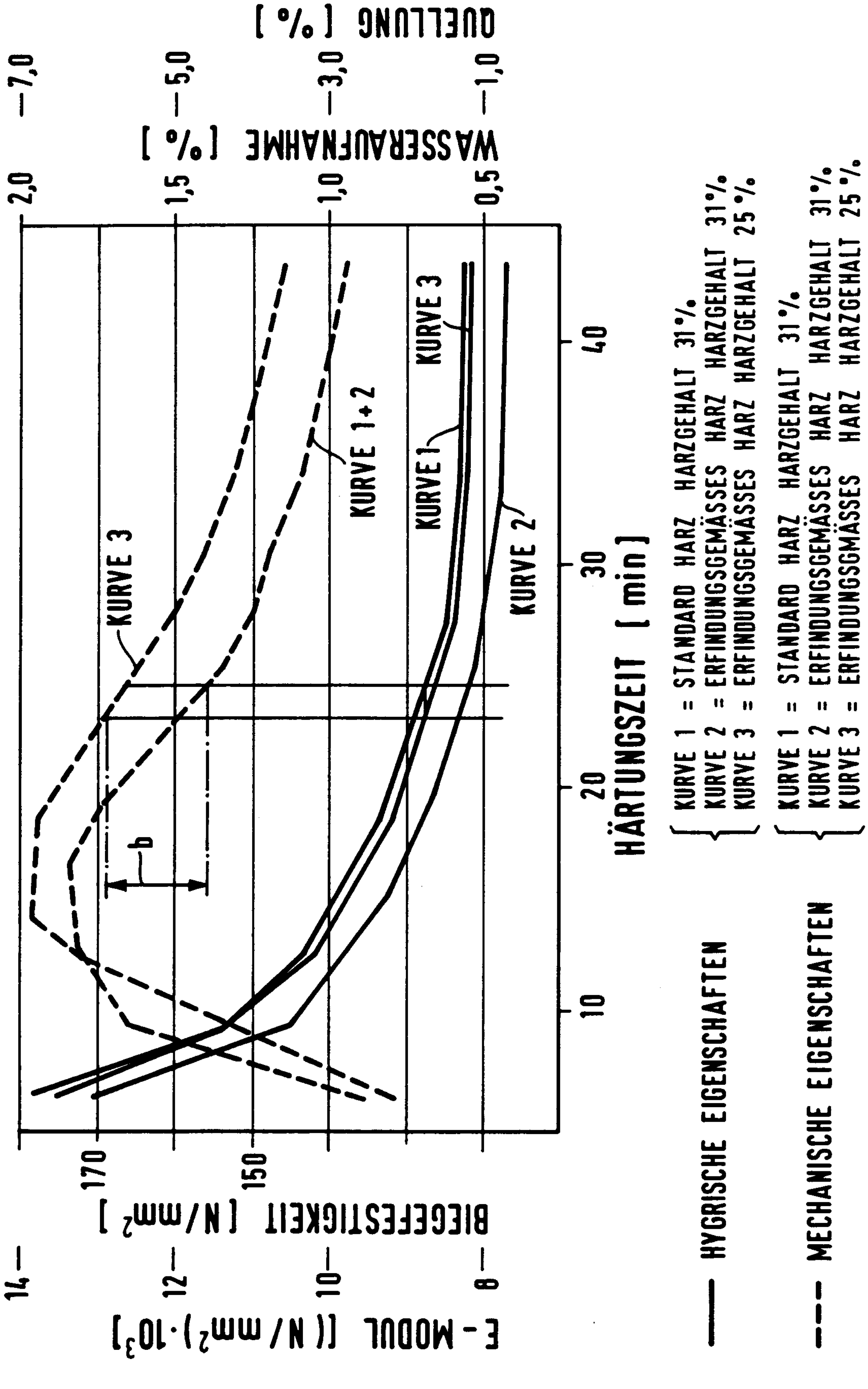
QUELLUNG [%]
-7,0
-5,0
-3,0
-1,0
WASSERAUFNAHME [%]
2,0
1,5
1,0
0,5
KURVE 3
KURVE 1+2
KURVE 3
KURVE 1
KURVE 2
b
E - MODUL [(N/mm²)·10³]
14
12
10
8
BIEGEFESTIGKEIT [N/mm²]
170
150
10
20
30
40
HÄRTUNGSZEIT [min]
HYGRISCHE EIGENSCHAFTEN
KURVE 1 = STANDARD HARZ HARZGEHALT 31%
KURVE 2 = ERFINDUNGSGEMÄSSES HARZ HARZGEHALT 31%
KURVE 3 = ERFINDUNGSGEMÄSSES HARZ HARZGEHALT 25%
MECHANISCHE EIGENSCHAFTEN
KURVE 1 = STANDARD HARZ HARZGEHALT 31%
KURVE 2 = ERFINDUNGSGEMÄSSES HARZ HARZGEHALT 31%
KURVE 3 = ERFINDUNGSGMÄSSES HARZ HARZGEHALT 25%

Fig. 3